# EUROPEAN PATENT APPLICATION

(11) **EP 4 343 601 A1**
(43) Date of publication of application: **27.03.2024**
(21) Application number: 23199073.0
(22) Date of filing: 22.09.2023
(51) Int. Cl.: G06F 21/64, H04L 9/00

(54) **INTERMEDIARY SYSTEM, TRANSACTION SYSTEM, METHOD OF INTERMEDIATING, AND CARRIER MEANS**

(30) Priority: 26.09.2022 JP 2022152666; 19.07.2023 JP 2023117181
(71) Applicant: Ricoh Company, Ltd., Tokyo 143-8555 (JP)
(72) Inventor: NAMIKI, Hitoshi, Tokyo, 143-8555 (JP)
(74) Representative: SSM Sandmair

(57) **Abstract**

An intermediary system (5c2) of an intermediary agent (C2) for intermediating a transfer of an asset between a supplier (A) of the asset and a user (D) of the asset, the intermediary system (5c2) including: a reception unit (51c2) configured to receive a request for transfer of a specific asset produced by a specific type of production method from another intermediary system (5c1) of another intermediary agent (C1); and a transmission unit (51c2) configured to transmit data related to the asset, to an intermediary node (7c2) of the intermediary agent (C2) on a blockchain network, the intermediary node (7c2) being capable of sharing data with another intermediary node (7c1) of the other intermediary agent (C1) on the blockchain network (100), the data related to the asset being for transferring ownership of the specific asset from the intermediary agent (C2) to the other intermediary agent (C 1).

## Description

### BACKGROUND

### Technical Field

The present disclosure relates to an intermediary system, a transaction system, a method of intermediating, and carrier means.

### Related Art

In recent years, electricity produced from renewable energy (referred to as "green power" in Japan) has been attracting attention. This electricity is produced from a subset of renewable resources, which are renewable energy, such as solar light, solar heat, wind power, biomass, geothermal power, hydropower, and heat in the atmosphere. Compared to the case where the fossil fuel such as oil, coal, and liquefied natural gas is used to produce electricity, production of electricity using renewable energy emits almost no CO₂, which is a cause for global warming. In other words, renewable energy is an energy resource that is environmentally friendly, from among various energy resources used for producing electricity. By operating facilities such as factories using the above-described green power, which is environmentally friendly, companies can increase brand credibility. There is a method for using a blockchain technology to track transactions of electricity produced from renewable energy (See Japanese Unexamined Patent Application Publication No. 2019-144851). The blockchain is one form of a distributed ledger. With a plurality of nodes (computers), a plurality of ledgers indicating transaction histories of assets such as electricity are associated with each other, thus preventing falsification of transaction history data.

A liberalization process called "electricity market liberalization" has been recently introduced. This allowed various types of electricity retailers, called "new electricity retailers", to enter the retail electricity market. Many of such new electricity retailers do not have means to procure electricity by themselves, and often procure electricity by purchasing only electricity in an amount based on a consumption predicted by the Japan Electric Power Exchange (JEPX).

Moreover, with the global trend towards decarbonization, the Act on Sophisticated Methods of Energy Supply Structures in Japan requires all electricity retailers to procure at least 44% of their electricity from non-carbon power generation (such as renewable energy) by 2030. With this trend, there is an increasing need for many electricity retailers to secure their own means to procure renewable energy, for example, by having their own power supply of renewable energy such as solar light.

On the other hand, there is a system based on a certificate (non-fossil certificate, J-credit, etc.), which separates a value of renewable energy, from electric power produced from such energy, and makes a transaction of only the value of renewable energy separately from a supply of electric power. As of 2021, many electricity retailers do not necessarily keep track of electricity produced from renewable energy, but use this certificate to show the value, i.e., a utility value, of renewable energy. The certificate can be used to prove that renewable energy has been used, without requiring the electricity retailers to have their own power supply of renewable energy. It would be advantageous for the electricity retailers, who are reluctant to have unstable power supply, such as a photovoltaic power generation facility, to use such certificate.

Further, the electricity retailers are responsible for making a balance between the demand and the supply of electric power (to make the demand and the supply of electric power equal), based on a contract with consumers. However, the supply of renewable energy such as solar light is often unstable, and it may be difficult to make the demand and the supply of electric power equal. For this reason, many electricity retailers, or intermediary agents who intermediate transaction of electricity, recognize the supply-demand balance control (providing electric power produced from renewable energy to users such as consumers based on contract), as a risk factor in business operation.

Further, in a case where the value of using renewable energy to produce electricity is managed separately from electric power of such energy, electric power could be supplied even if such electric power that is actually supplied has not been produced from renewable energy. In another case, the value of using renewable energy, such as solar light generated in the daytime, may be associated with electric power supplied at night. This is different from the above-described ideal state where the supply-demand balance is stabilized. Accordingly, electric power may be based on thermal power or atomic power, such that use of renewable energy as a source to produce electric power may not be facilitated.

There is an intermediary agent, who intermediates the transfer of an asset produced by a specific type of production method for a user based on contract, without separating the value of being produced by the specific type of production method (such as the value of using renewable energy), from a specific asset produced by the specific type of production method (such as electric power produced from renewable energy). However, the demand and supply of electric power produced from renewable energy are not always balanced between the supplier and the user of such electric power, at least within a range according to the contract of the intermediary agent. In particular, even when there is an excessive amount of electric power produced from renewable energy, there was no mechanism for timely making transactions of electric power produced from renewable energy with another intermediary agent who does not have a sufficient amount of electric power produced from renewable energy.

In view of the above-described drawbacks, according to at least one embodiment of the present invention, there is provided a system in which an intermediary agent and another intermediary agent are able to interchange asset such as renewable energy in a timely manner.

### SUMMARY

Example embodiments include an intermediary system (5c2) of an intermediary agent (C2) for intermediating a transfer of an asset between a supplier (A) of the asset and a user (D) of the asset, the intermediary system (5c2) including: a reception unit (51c2) configured to receive a request for transfer of a specific asset produced by a specific type of production method from another intermediary system (5c1) of another intermediary agent (C1); and a transmission unit (51c2) configured to transmit data related to the asset, to an intermediary node (7c2) of the intermediary agent (C2) on a blockchain network, the intermediary node (7c2) being capable of sharing data with another intermediary node (7c1) of the other intermediary agent (C1) on the blockchain network (100), the data related to the asset being for transferring ownership of the specific asset from the intermediary agent (C2) to the other intermediary agent (C1).

Example embodiments include a transaction system including the above-described intermediary system, and the intermediary node.

Example embodiments include a method of intermediating a transfer of an asset between a supplier (A) of the asset and a user (D) of the asset, performed by an intermediary system (5c2) of an intermediary agent. The method includes: receiving (S96) a request for transfer of a specific asset produced by a specific type of production method from another intermediary system (5c1) of another intermediary agent (C1); and transmitting (S97) data related to the asset, to an intermediary node (7c2) of the intermediary agent (C2) on a blockchain network, the intermediary node (7c2) being capable of sharing data with another intermediary node (7c1) of the other intermediary agent (C1) on the blockchain network (100), the data related to the asset being for transferring ownership of the specific asset from the intermediary agent (C2) to the other intermediary agent (C1).

Example embodiments include carrier means carrying computer readable code for controlling a computer system to carry out the above-described method.

As described above, according to at least one embodiment, asset, such as renewable energy, can be interchanged between one intermediary agent and another intermediary agent in a timely manner.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram illustrating a transaction system according to an embodiment of the present disclosure;
FIG. 2 is a diagram illustrating a hardware configuration of each system and each node in the transaction system of FIG. 1, with electrical connections, according to an embodiment of the present disclosure;
FIG. 3 is a diagram illustrating a functional configuration of the transaction system illustrated in FIG. 1, according to an embodiment of the present disclosure;
FIG. 4 is a flowchart illustrating processing to create a node, according to an embodiment of the present disclosure;
FIG. 5 is a conceptual diagram illustrating an execution file of software for creating a node, according to an embodiment of the present disclosure;
FIG. 6 is a sequence diagram illustrating processing of sharing data related to produced electric power, between pairs of nodes in a blockchain network, according to an embodiment of the present disclosure;
FIG. 7 is a table illustrating a data structure of data related to electric power, according to an embodiment of the present disclosure.;
FIG. 8 is a sequence diagram illustrating processing of sharing data related to consumed electric power, between pairs of nodes in the blockchain network, according to an embodiment of the present disclosure;
FIG. 9 is a sequence diagram illustrating processing of sharing data related to the intermediated or transferred electric power, between pairs of nodes in a blockchain network, according to an embodiment of the present disclosure.
FIG. 10 is a sequence diagram illustrating processing of storing the data on the amount of surplus power in a blockchain network, according to an embodiment of the present disclosure;
FIG. 11 is a table illustrating a data structure of the data related to the amount of surplus power according to an embodiment of the present disclosure;
FIG. 12 is a sequence diagram illustrating processing of storing the data on the amount of power shortage and the data on the amount of surplus power to be transferred in a blockchain network, according to an embodiment of the present disclosure; and
FIG. 13 is a table illustrating a data structure of the data related to the amount of power shortage, according to an embodiment of the present disclosure.
The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments are described in detail below, with reference to the drawings.

### Overview of System Configuration

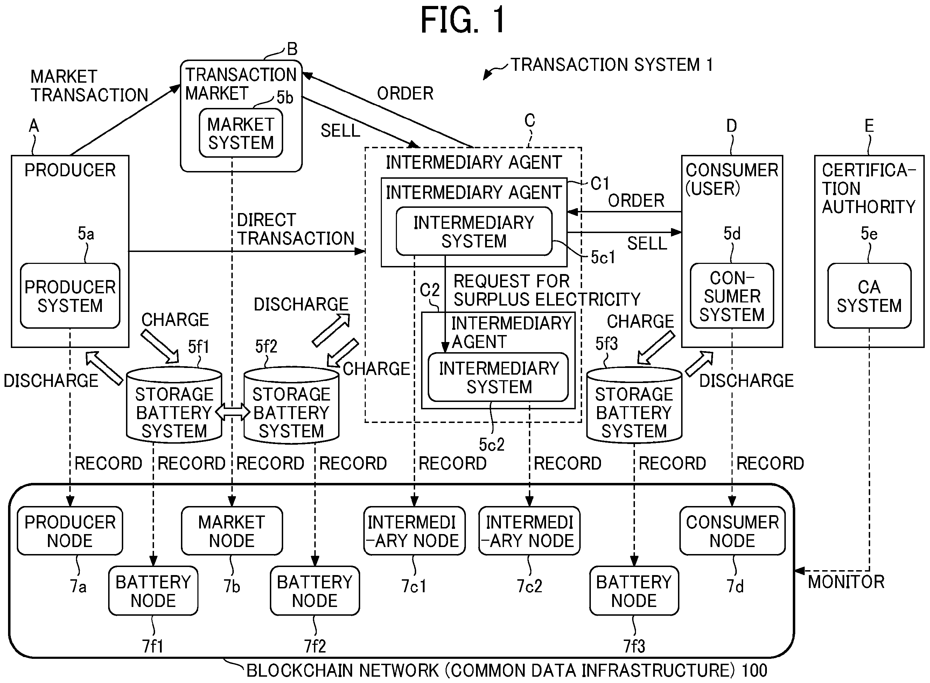

First, overview of a configuration of a transaction system 1 is described according to an exemplary embodiment. FIG. 1 is a schematic view of an example of the transaction system 1 according to the present embodiment. In this disclosure, the case in which electricity is used as an example of an asset is described.

### Explanation on Entities

As illustrated in FIG. 1, the transaction system 1 includes a producer A of electricity, a transaction market B of electricity, an intermediary agent C of electricity, a consumer D of electricity, and a certification authority E. The producer A, the transaction market B, the intermediary agent C, and the consumer D perform transactions of electric power using a blockchain network 100, which is an example of a common data infrastructure. A system operator, who manages the blockchain network 100, requests entities such as companies (the producer A, the transaction market B, the intermediary agent C, and the consumer D) to register in the transaction system 1, and issues a digital certificate to each entity that has registered. The blockchain network 100 is provided with an application programming interface (API), which allows a user, such as the system operator, to record or read data regarding interchange or transactions of electric power between various companies. Examples of such data include data related to electric power, data related to surplus of electric power (surplus power), data related to shortage of electric power (insufficient power or power shortage), which will be described later. The standard API allows the user, such as the system operator of various companies, to generate a ledger on the blockchain network 100, and access the blockchain network 100.

In operation, electricity produced by the producer A is distributed from the producer A to the consumer D via a transmission and distribution network, constructed by, for example, substations and transmission lines. The transaction market B or the intermediary agent C manages the transactions (transfers) of ownership of electricity (electric power) between the producer A and the consumer D.

The producer A, an example of a supplier, is an entity that produces electricity from solar light, which is one example of renewable energy resource for producing electricity (referred to as "green power" in Japan). Other examples of the producer A may include an entity that produces electricity from petroleum as an example of fossil fuel. However, in this embodiment, it is assumed that at least one producer A produces electricity from renewable energy.

The transaction market B is an institution for exchanging (ownership of) electricity produced by the producer A.

The intermediary agent C is an entity that intermediates the transfer of ownership of electricity (or electric power) between different entities. In the following, the transfer of ownership of electricity may be referred to as transaction of electric power. The intermediary agent C buys (makes an order of) electric power from the transaction market B. The transaction market B sells electric power to the intermediary agent C. Further, the intermediary agent C can directly make a transaction of electric power with the producer A without intervening the transaction market B. In this embodiment, two intermediary agents C1 and C2 are present. The ownership of electricity may be transferred between the intermediary agent C1 and the intermediary agent C2, or only transferred from one of the intermediary agents C1 and C2 to the other.

The consumer D is an example of a user, and makes an order of electric power to the intermediary agent C. The intermediary agent C sells electric power to the consumer D. In a case the asset is not consumed like electricity, such as in the case of a real estate property, the user may be an owner who currently owns the asset. With the production method certificate, the consumer D can apply for public subsidy, based on the renewable energy usage ratio (or CO₂ reduction rate) of the consumer D, or total usage of renewable energy of the consumer D.

The certificate authority E monitors transactions (for example, on the blockchain network 100) to ensure that the electric power in the transaction is electric power produced from renewable energy. Specifically, the certification authority E is a public institution such as a national or local public entity that monitors a type of production method of asset (for example, a specific type of production method). Example types of production method of electricity include a production method using solar light or solar heat, a production method using wind power, a production method using biomass, a production method using geothermal power, a production method using hydroelectric resources, a production method using heat in the atmosphere, and a production method using nuclear power. Of those various types of production methods of electricity, the production methods of electricity using, for example, solar light, solar heat, wind power, biomass, geothermal power, hydropower, and heat in the atmosphere are grouped into a production method using renewable energy. The production methods of electricity using petroleum, coal, and liquefied natural gas are grouped into a production method using fossil fuel. Compared to the production method using fossil fuel, the production method using renewable energy emits almost no CO₂, which is a cause for global warming. In other words, renewable energy is an energy resource that is environmentally friendly. In this disclosure, as examples of renewable energy resource, solar light or heat, wind power, biomass, geothermal power, hydropower, and heat in the atmosphere are used. Further, as examples of fossil fuel, oil, coal, and liquefied natural gas are used.

If the certificate authority E finds any fraud in data written through monitoring the blockchain network 100, the certificate authority E gives a penalty such as revocation of a certificate to an entity (for example, a company) that has written such data, such that integrity of the data on the blockchain network 100 is retained. Based on the decentralized system of the blockchain network 100, even if any node drops (drops out of sync), the blockchain network 100 still operates as long as there are other nodes. Since the other entities (companies) maintain the system including a producer system 5a, business can be continued as usual to allow transactions of electric power. Further, since information on revocation is shared between the nodes on the blockchain network 100, each entity (company) is able to know a range of influence of such revocation.

There may be multiple of producers A, transaction markets B, consumers D, or certificate authorities E. Further, there may be three or more intermediary agents C.

### Overview of Configuration of Transaction System

Referring to FIG. 1, the overall configuration of the transaction system 1 is described according to the embodiment. Each of the nodes in the transaction system 1 authenticates an access to each node by checking a digital certificate of a registered entity (company), and allows each node to record or read data on the blockchain.

The producer A owns or manages the producer system 5a and a producer node 7a. The producer system 5a acquires power generation information indicating an amount of power generated from a power generation system 3 to be described later. The producer system 5a is authorized to access the producer node 7a.

The transaction market B owns or manages a transaction market system ("market system") 5b and a transaction market node ("market node") 7b. The transaction market system 5b is authorized to access the transaction market node 7b.

The intermediary agent C1 owns or manages an intermediary system 5c1 and an intermediary node 7c1. The intermediary agent C2 owns or manages an intermediary system 5c2 and an intermediary node 7c2. The intermediary systems 5c1 and 5c2 are authorized to access the intermediary nodes 7c1 and 7c2, respectively.

The consumer D owns or manages a consumer system 5d and a consumer node 7d. The consumer system 5d is authorized to access the consumer node 7d.

The certificate authority E owns or manages a certificate authority (CA) system 5e. The certificate authority system 5e accesses the blockchain network 100 and checks whether or not electric power in the transaction has been produced from renewable energy.

The transaction system 1 further includes one or more storage batteries that store electricity being produced. Specifically, the transaction system 1 includes storage battery systems 5f1, 5f2, and 5f3, each of which includes a storage battery. The producer A can charge power to the storage battery system 5f1 or can discharge power from the storage battery system 5f1. The intermediary agent C can charge power to the storage battery system 5f2 or can discharge power from the storage battery system 5f2. Further, the electricity may be charged or discharged from one of the storage battery systems 5f1 and 5f2 to the other one of the storage battery systems 5f1 and 5f2. The consumer D can charge power to the storage battery system 5f3 or can discharge power from the storage battery system 5f3.

The storage battery systems 5f1, 5f2, and 5f3 are authorized to access the storage battery nodes 7f1, 7f2, and 7f3, respectively.

The producer system 5a, the transaction market system 5b, the intermediary systems 5c1 and 5c2, the consumer system 5d, the certificate authority system 5e, and the storage battery systems 5f1, 5f2, and 5f3 are collectively referred to as a "system 5". The producer node 7a, the transaction market node 7b, the intermediary nodes 7c1 and 7c2, the consumer node 7d, and the storage battery nodes 7f1, 7f2, and 7f3 are collectively referred to as a "node 7". The blockchain network 100 is constructed by a plurality of nodes including the nodes 7 illustrated in FIG. 1.

### Hardware Configuration of System and Node

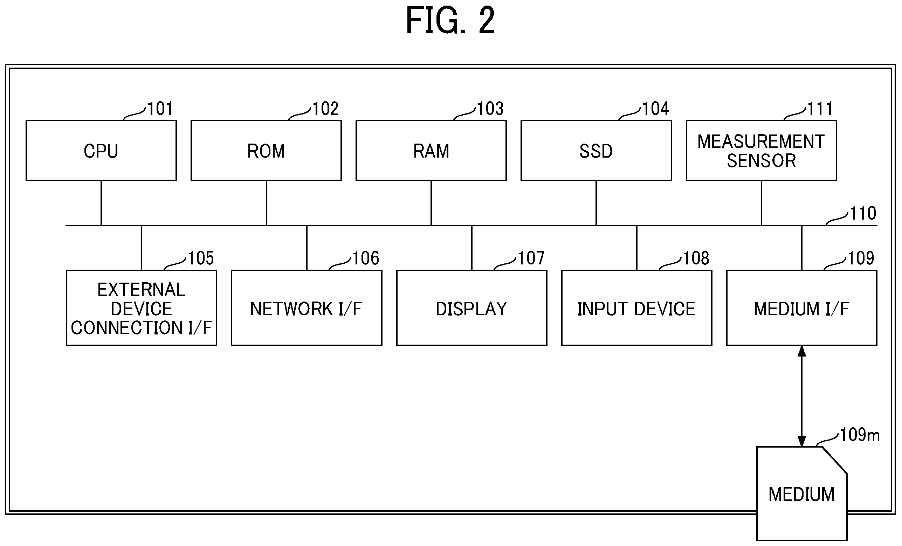

Referring now to FIG. 2, a hardware configuration of each of the system 5 and the node 7 is described, according to the embodiment. FIG. 2 is a diagram illustrating a hardware configuration of each of the system 5 and the node 7 illustrated in FIG. 1.

In particular, FIG. 2 is a diagram illustrating a hardware configuration of each of the system 5 and node 7, with electrical connections, according to the embodiment.

As illustrated in FIG. 2, the system 5 and the node 7 are each implemented by a computer, which includes a central processing unit (CPU) 101, a read only memory (ROM) 102, a random access memory (RAM) 103, a solid state drive (SSD) 104, an external device connection interface (I/ F) 105, a network I/F 106, a display 107, an input device 108, a medium I/F 109, and a bus line 110.

The CPU 101, which is a processor, controls entire operation of the information processing apparatus 10. The ROM 102 stores a program for booting the CPU 101 such as an initial program loader (IPL). The RAM 103 is used as a work area for the CPU 101.

The SSD 104 reads or writes various types of data therein under control of the CPU 101. Any memory such as a hard disk drive (HDD) may be used instead of the SSD 104.

The external device connection I/F 105 is an interface that connects the computer to various external devices. Examples of the external device include a display, a speaker, a keyboard, a mouse, a universal serial bus (USB) memory, and a printer.

The network I/F 106 is an interface that communicates data via a communication network such as the Internet, such as a network interface circuit.

The display 107 is an example of display means that displays various images, such as a liquid crystal display (LCD) and an organic electroluminescence (EL) display.

The input device 908 is an example of input means that allows a user to select or execute various instructions, select a target for processing, or move a cursor. Examples of the input device 908 include a pointing device such as a stylus pen and a touch panel.

The medium I/F 109 controls reading and writing (storing) of data from and to a recording medium 109m such as a flash memory. Examples of the recording medium 109m include a DVD and a BLU-RAY DISC.

The bus line 110 is, for example, an address bus or a data bus, which electrically connects the elements, such as the CPU 101 illustrated in FIG. 2, each other.

In addition to the elements illustrated in FIG. 2, the power generation system 3 to be described later further includes a measurement sensor 111 that measures an amount of electric power that is generated. Similarly, the consumer system 5d further includes a measurement sensor 111 that measures an amount of electric power that is consumed in addition to the elements illustrated in FIG. 2.

### Functional Units of Transaction System

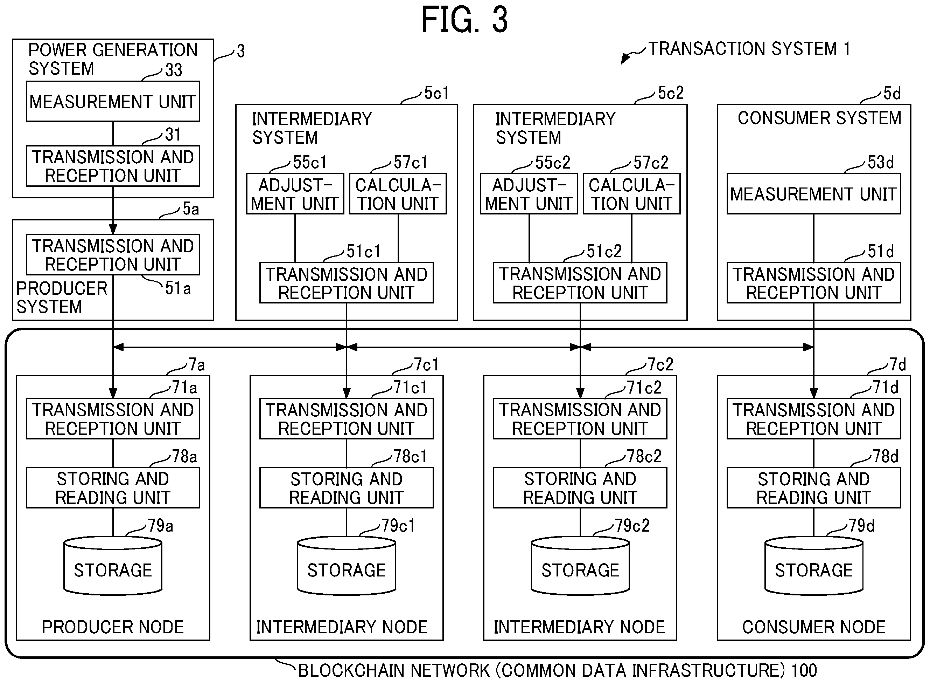

Referring now to FIG. 3, a functional configuration of the transaction system 1 is described according to the embodiment. Since the transaction market system 5b and the certificate authority system 5e have the same functional configuration as that of the producer system 5a, description thereof will be omitted.

### Power Generation System

As illustrated in FIG. 3, the power generation system 3 is implemented by, for example, a smart meter, and includes a transmission and reception unit 31 and a measurement unit 33. These units are functions implemented by or caused to function by operating any of the hardware elements illustrated in FIG. 2 in cooperation with the instructions of the CPU 101 according to the control program expanded from the SSD 104 to the RAM 103.

The transmission and reception unit 31 performs data communication with another apparatus (system).

The measurement unit 33, which is implemented by the measurement sensor 111, measures an amount of power generated by the power generation facility at regular time intervals (for example, every 30 minutes).

### Producer System

As illustrated in FIG. 3, the producer system 5a includes a transmission and reception unit 51a. The transmission and reception unit 51a is a function implemented by or caused to function by operating at least one of the hardware elements illustrated in FIG. 2 in cooperation with the instructions of the CPU 101 according to the control program expanded from the SSD 104 to the RAM 103.

The transmission and reception unit 51a performs data communication with another apparatus (system).

### Intermediary System

### Intermediary System 5c1

As illustrated in FIG. 3, the intermediary system 5c1 includes a transmission and reception unit 51c1, an adjustment unit 55c1, and a calculation unit 57c1. These units are functions implemented by or caused to function by operating any of the hardware elements illustrated in FIG. 2 in cooperation with the instructions of the CPU 101 according to the control program expanded from the SSD 104 to the RAM 103.

The transmission and reception unit 51c1 performs data communication with another apparatus (system).

The adjustment unit 55c1 performs supply-demand balance control to allocate electric power, out of the total amount of electric power currently owned by the intermediary agent C1. Specifically, the adjustment unit 55c1 allocates, to the consumer D, electric power having a specific type of production method (production method indicating solar light, wind power, etc.) in a specific amount, in accordance with details of the contract with the consumer D. In other words, the adjustment unit 55c1 allocates a specific asset produced by a specific type of production method, such as electric power produced from renewable energy, to the consumer D, in an amount corresponding to the details of the contract.

The calculation unit 57c1 calculates an amount of electric power shortage, out of electric power to be supplied to the consumer D by the intermediary agent C1 according to the contract. The calculation unit 57c1 further calculates, of the total amount of electric power currently owned by the intermediary agent C1, an amount of electric power that remains even after the electric power is supplied to the consumer D according to the contract.

### Intermediary System 5c2

As illustrated in FIG. 3, the intermediary system 5c2 includes a transmission and reception unit 51c2, an adjustment unit 55c2, and a calculation unit 57c2. These units are functions implemented by or caused to function by operating any of the hardware elements illustrated in FIG. 2 in cooperation with the instructions of the CPU 101 according to the control program expanded from the SSD 104 to the RAM 103.

The transmission and reception unit 51c2 performs data communication with another apparatus (system).

The adjustment unit 55c2 performs supply-demand balance control to allocate electric power, out of the total amount of electric power currently owned by the intermediary agent C2. Specifically, the adjustment unit 55c2 allocates, to the consumer D, electric power having a specific type of production method (production method indicating solar light, wind power, etc.) in a specific amount, in accordance with details of the contract with the consumer D.

The calculation unit 57c2 calculates an amount of electric power shortage, out of electric power to be supplied to the consumer D by the intermediary agent C2 according to the contract. The calculation unit 57c2 further calculates, of the total amount of electric power currently owned by the intermediary agent C2, an amount of electric power that remains even after the electric power is supplied to the consumer D according to the contract.

### Consumer System

As illustrated in FIG. 3, the consumer system 5d is implemented by a smart meter, for example, and includes a transmission and reception unit 51d and a measurement unit 53d. These units are functions implemented by or caused to function by operating any of the hardware elements illustrated in FIG. 2 in cooperation with the instructions of the CPU 101 according to the control program expanded from the SSD 104 to the RAM 103.

The transmission and reception unit 51d, which is implemented by the network I/F 106 that operates under control of the CPU 101, performs data communication with another apparatus (system).

The measurement unit 33, which is implemented by the measurement sensor 111, measures an amount of power consumed by an electric device at regular time intervals (for example, every 30 minutes).

### Node

The functional configuration of each node is described according to the embodiment. Since the storage battery nodes 7f1, 7f2, and 7f3 have the same configuration as that of the producer node 7a, description thereof is omitted.

The producer node 7a includes a transmission and reception unit 71a and a storing and reading unit 78a. The producer node 7a further includes a storage unit 79a, implemented by the ROM 102, RAM 103, or SSD 104 illustrated in FIG. 2.

The transmission and reception unit 71d, which is implemented by the network I/F 106 that operates under control of the CPU 101, performs data communication with another apparatus (system).

The storing and reading unit 78a, which is implemented by instructions of the CPU 101, stores various data (or information) in the storage unit 79a and reads various data (or information) from the storage unit 79a. The storage unit 79a is implemented by the ROM 102, RAM 103, or SSD 104 illustrated in FIG. 2.

The intermediary node 7c1, the intermediary node 7c2, and the consumer node 7d include transmission and reception units 71c1, 71c2, and 71d, respectively, each of which has the same functions as those of the transmission and reception unit 71d, and thus description thereof is omitted. The intermediary node 7c1, the intermediary node 7c2, and the consumer node 7d include storage and reading units 78c1, 78c2, and 78d, respectively, each of which has the same functions as those of the storage and reading unit 78a, and thus description thereof is omitted. The intermediary node 7c1, the intermediary node 7c2, and the consumer node 7d include the storage units 79c1, 79c2, and 79d, respectively, and have the same functions as those of the storage unit 79a, and thus description thereof is omitted.

### Processing or Operation of Transaction System

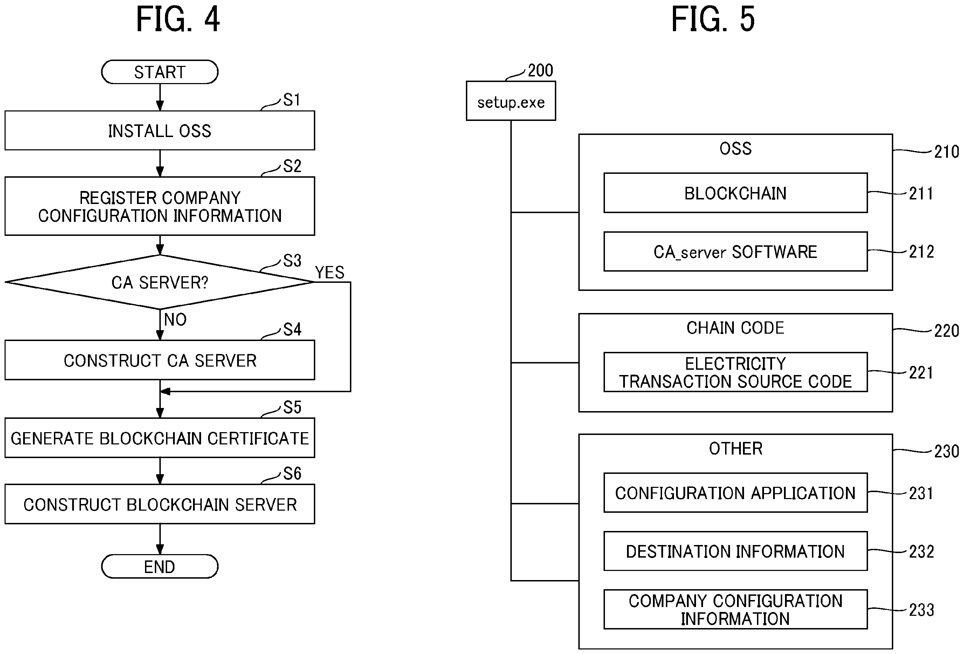

Referring to FIGs. 4 to 13, processing or operation performed by the transaction system 1 is described according to the embodiment. Each of the entities such as companies (the producer A, the transaction market B, the intermediary agents C1 and C2, and the consumer D) can store (write) data in the node 7 of its own, once the systems and devices owned by each entity are made applicable to the write standard API. As a result, each entity is able to use the blockchain network 100. For example, in the case of the producer A in FIG. 1, a control panel of the power generation facility is made applicable to the write standard API. The control panel of the power generation facility then allows a user to perform writing operation on the producer node 7a via the API. Alternatively, the producer system 5a may collect data on an amount of power generated from the power generation facility, and the producer system 5a performs writing operation on the producer node 7a via the API.

### Node Creation Processing

First, referring to FIGs. 4 and 5, a procedure for creating a node is described according to the embodiment. FIG. 4 is a flowchart illustrating example processing to create a node. FIG. 5 is a conceptual diagram illustrating an execution file of software for creating a node.

To create a node, a creator (for example, a user who works for a company) prepares a server to be managed by the creator. The server may be a general PC, which runs on a LINUX operating system (OS). Then, the creator acquires software for creating a node, for example, from a company that manages at least a part of the transaction system 1. As illustrated in FIG. 5, the executable file "setup.exe" 200 of the software for creating the node includes related Open Source Software (OSS) 210, chaincode 220, and other types of information (other) 230. For convenience, the executable file is described as "setup.exe", but any file name may be used as long as it is an executable file. In the case of LINUX, if the executable file itself has an executable flag, the extension may not be ". exe".

The OSS 210 includes, for example, an OSS of a blockchain ("blockchain" 211) and libraries required for operating the OSS 210. The OSS 210 further includes software (for example, OpenSSL) 212 for constructing a Certificate Authority (CA) server for managing certificates. The OSS 210 may further include docker, node.js, python, etc., as a package if they are required to operate the blockchain or the certificate authority system 5e of the certificate authority E. The OSS 210 may be downloaded via the network based on a determination that the connection to the blockchain network is established.

The chaincode 220 includes a source code ("electricity transaction source code" 221) for performing transaction of electricity, and this source code is used as an API when a node is created.

The other types of information (230) of the setup.exe 200 include a Domain Name System (DNS) end point or an IP address of a communication destination, a digital certificate of the communication destination, etc., as information on a communication destination ("destination information" 232) to be used when connecting to an external device that has created the node. The other types of information (230) further include a configuration application 231 for setting configuration information for company (the creator). The configuration information for company ("company configuration information" 233), such as a DNS end point or a common name to be registered in a certificate, is used to issue a company name or the certificate.

Referring now to FIG. 4, processing to install software and registering configuration information for company is described according to an embodiment.

At S1, in response to an instruction from the creator, a personal computer (creator's PC) executes an execution file (setup. exe) for node creation to start installation of OSS on the creator's PC.

At S2, the creator's PC activates the application for configuration, to register the company configuration information 233. The configuration information 233 for company includes information for constructing a CA server of the company, and information for constructing a node of a blockchain of the company.

The processing of S3 determines whether the CA server exists in the creator's company or not, and the processing after S3 differs depending on a result of determination.

At S4, in a case where the CA server does not exist in the creator's company (NO), the CA server is constructed, and a digital certificate for the CA server is generated using the information for constructing the CA server at the same time when constructing the CA server. On the other hand, in a case where the CA server exists in the creator's company (YES), the processing of S4 is omitted.

At S5, the creator's PC generates a digital certificate for blockchain, based on the information on the CA server constructed at the processing of S4 and the information for constructing the node of the blockchain set at the processing of S2.

At S6, a blockchain server is constructed using the digital certificate generated at the processing of S5. At this time, the blockchain server connects to the blockchain network 100 (common data infrastructure) by using the digital certificate generated at the processing of S5 and the communication destination information. The blockchain server activates the chaincode 220 so as to operate the API in the system. The blockchain server and the CA server together implement each system included in the transaction system 1 of FIG. 1. Specifically, such system includes the producer system 5a, the transaction market system 5b, the intermediary systems 5c1 and 5c2, the consumer system 5d, the certificate authority (CA) system 5e, and the storage battery systems 5f1 and 5f2.

### Processing to Interchange Electric Power

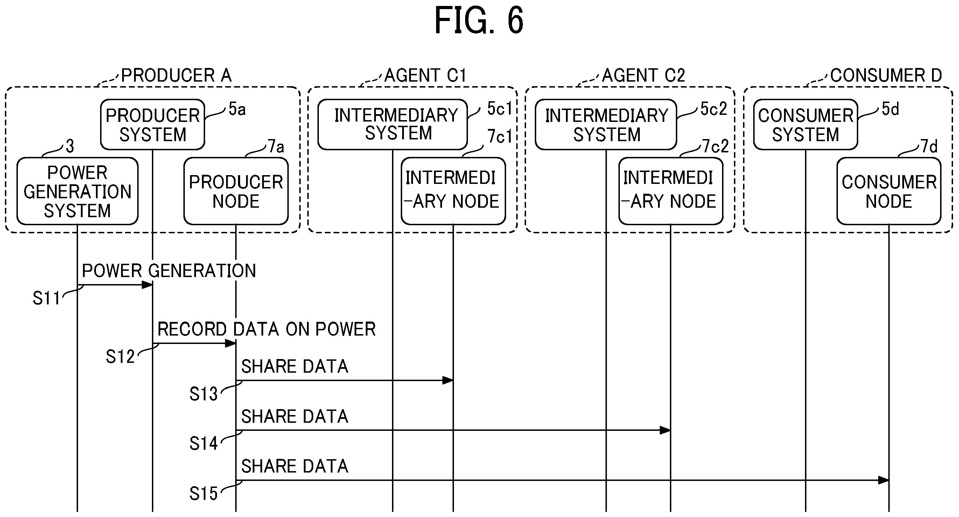

Referring now to FIGs. 6 to 13, a series of processes in which the intermediary agent C1 and the intermediary agent C2 interchange electric power is described according to the embodiment. The processes illustrated in FIGs. 6 to 13, which will be described below, are performed, for example, every 30 minutes per day. In the present embodiment, in order to maintain realtime performance, it is desired to use a mechanism requiring a shorter time for data write (for example, a consortium blockchain network). The plurality of intermediary agents C can check data regarding interchange and transaction of electric power, such that electric power can be interchanged between the plurality of intermediary agents C. Examples of such data include data on electric power, data on surplus power, and data on power shortage. In this embodiment, realtime performance indicates a processing time that enables smooth transaction of electric power. In Japan, as of 2022, data on electric power is collected every 30 minutes, so that calculation of an amount of power generation or an amount of power consumption, and transaction of electric power are expected to complete in 30 minutes. In the future, this rule may be revised and definition of the realtime performance may be changed, such that the processing time may be shortened to, for example, every 15 minutes.

This realtime performance introduces a new value, which has not been provided by the conventional power management using blockchain.

For example, by visualizing an excess or a shortage of electric power in real time, renewable energy can be interchanged between different entities so as to stabilize the supply-demand balance. As the ledger itself of the blockchain can be used as evidence, credit cost in transactions between entities (companies) can be reduced. The use of blockchain reduces the risk that the entity (company) may encounter by owning renewable energy, so that it would be easier for the entity (company) to own renewable energy. As a result, investment in renewable energy is facilitated in the future.

In the following description, it is assumed that the intermediary agent C obtains electric power directly from the producer A, without intervening the transaction market B. The processing described referring to FIGs. 6 to 13, which will be described later, is performed every 30 minutes as described above. Practically, however, the intermediary agent (retailer) is required to submit the prediction of supply and demand of electric power one day before the actual supply and demand. Therefore, information on an amount of surplus power and an amount of power shortage is generated based on prediction data of one day before. Based on such information, agreement on the transaction of electric power may be previously made.

### Sharing of Data Related to Produced Electric Power

First, referring to FIG. 6, processing to share data related to electric power produced by the producer A in the blockchain network 100 is described according to the embodiment. FIG. 6 is a sequence diagram illustrating processing of sharing data related to electric power that is produced, in the blockchain network 100, according to the embodiment.

S11: In the power generation system 3, the measurement unit 33 measures an amount of produced power, and the transmission and reception unit 31 transmits power generation information indicating the measured amount of produced power to the producer system 5a. The transmission and reception unit 51a of the producer system 5a receives the power generation information.

S12: The transmission and reception unit 51a of the producer system 5a transmits data related to electric power, which includes the power generation information, to the producer node 7a. The transmission and reception unit 71a of the producer node 7a receives the data related to electric power, and the storing and reading unit 78a stores the data related to electric power in the storage unit 79a.

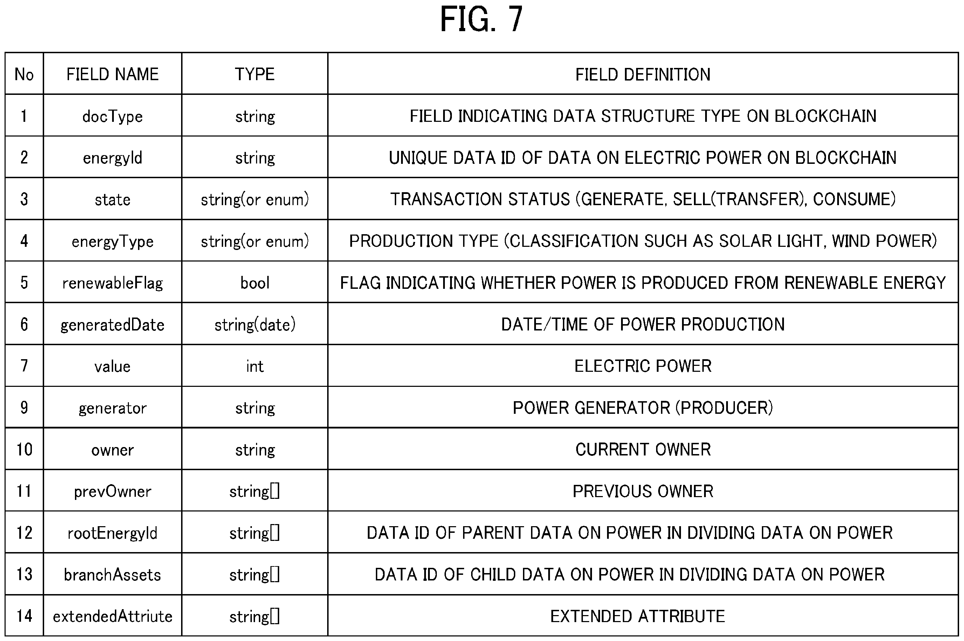

FIG. 7 is a diagram illustrating a data structure of data related to electric power ("power-related data"). As illustrated in FIG. 7, the power-related data includes a field indicating a data structure type in the blockchain, a unique data ID of the power-related data in the blockchain, a transaction status (generate, sell (transfer), consume, etc.), a production method type (classification such as solar light, wind power, etc.), a flag indicating whether or not electric power is produced from renewable energy, a date and time of production of electric power, an amount of electric power, a generator (producer) of electric power, a current owner of electric power, a previous owner of electric power, a data ID of the "parent" power-related data when dividing the power-related data, a data ID of "child" power-related data when dividing the power-related data, and an extended attribute. For example, in the case where 10kWh of electric power is produced, if the intermediary agent C1 sells (intermediates transfer) 6kWh of electric power to the consumer D, the parent power-related data indicating 4kWh (calculated by 10kWh-6kWh) of power and the child power-related data indicating power of 6kWh are generated and are managed with respective data IDs being assigned as illustrated in FIG. 7.

In this case, initially, i.e., before selling (intermediating transfer), the data structure illustrated in FIG. 7 indicates that the transaction status is "generate", the current owner of the electric power is "intermediary agent C1", and the previous owner of the electric power is "producer A". After selling (intermediating transfer), the transaction status is "sell (transfer)", the current owner of the electric power is "consumer D", and the previous owner of the electric power is "intermediary agent C1".

S13: The transmission and reception unit 71a of the producer node 7a transmits the data related to electric power to the intermediary node 7c1. The transmission and reception unit 71c1 of the intermediary node 7c1 receives the data related to electric power, and the storing and reading unit 78c1 stores the data related to electric power in the storage unit 79c1, such that data is shared between the nodes 7a and 7c1.

S14: The transmission and reception unit 71a of the producer node 7a transmits the data related to electric power to the intermediary node 7c2. The transmission and reception unit 71c2 of the intermediary node 7c2 receives the data related to electric power, and the storing and reading unit 78c2 stores the data related to electric power in the storage unit 79c2, such that data is shared between the nodes 7a and 7c2.

S15: The transmission and reception unit 71a of the producer node 7a transmits the data related to electric power to the consumer node 7d. The transmission and reception unit 71d of the consumer node 7d receives the data related to electric power, and the storing and reading unit 78d stores the data related to electric power in the storage unit 79d to share data, such that data is shared between the nodes 7a and 7d.

### Sharing of Data Related to Consumed Electric Power

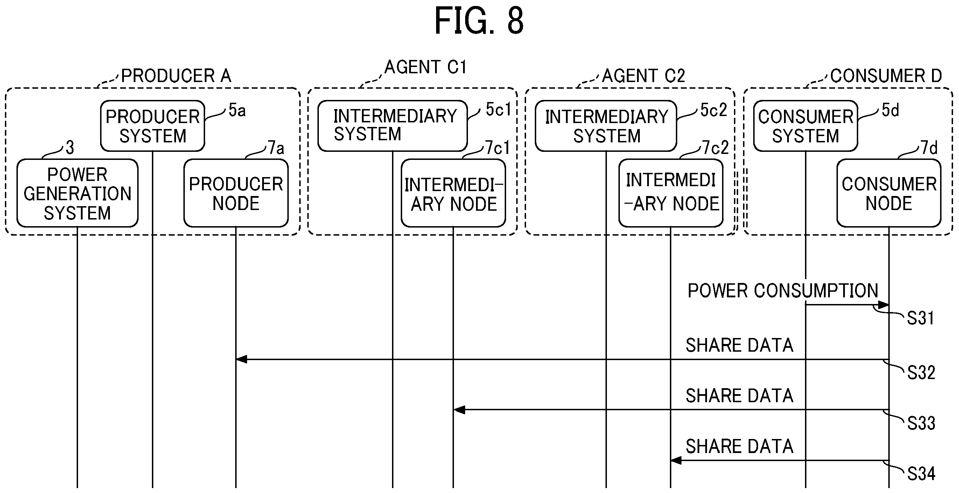

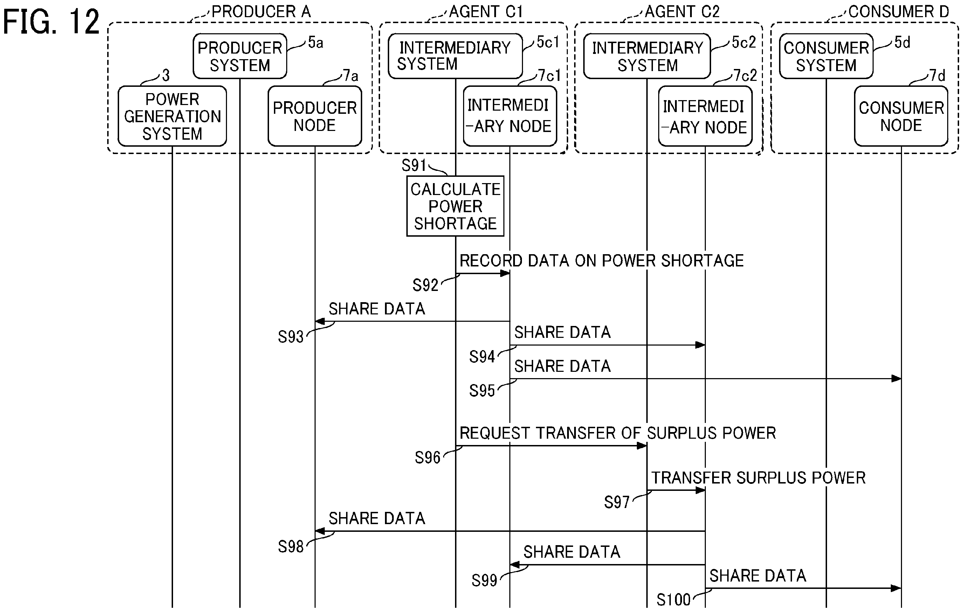

Referring now to FIG. 8, processing to share data related to electric power consumed by the consumer D in the blockchain network 100 is described according to the embodiment. FIG. 8 is a sequence diagram illustrating processing of sharing data related to electric power consumed in the blockchain network 100, according to the embodiment. In terms of flow of time, if electric power is transferred between the intermediary agents, the processing of FIG. 8 is performed after the processing of FIG. 12.

S31: In the consumer system 5d, the measurement unit 53d measures an amount of consumed power, and the transmission and reception unit 51d transmits power consumption information indicating the measured amount of consumed power to the consumer node 7d, as data related to electric power consumed. The transmission and reception unit 71d of the consumer node 7d receives the data related to electric power, and the storing and reading unit 78d stores the data related to electric power in the storage unit 79d. In this case, the data structure illustrated in FIG. 7 indicates that the transaction status is "consume", the current owner of the electric power is "consumer D", and the previous owner of the electric power is "intermediary agent C1".

S32: The transmission and reception unit 71d of the consumer node 7d transmits the data related to electric power to the producer node 7a. The transmission and reception unit 71a of the producer node 7a receives the data related to electric power, and the storing and reading unit 78a stores the data related to electric power in the storage unit 79a, such that data is shared between the nodes 7d and 7a.

S33: The transmission and reception unit 71d of the consumer node 7d transmits the data related to electric power to the intermediary node 7c1. The transmission and reception unit 71c1 of the intermediary node 7c1 receives the data related to electric power, and the storing and reading unit 78c1 stores the data related to electric power in the storage unit 79c1, such that data is shared between the nodes 7d and 7c1.

S34: The transmission and reception unit 71d of the consumer node 7d transmits the data related to electric power to the intermediary node 7c2. The transmission and reception unit 71c2 of the intermediary node 7c2 receives the data related to electric power, and the storing and reading unit 78c2 stores the data related to electric power in the storage unit 79c2, such that data is shared between the nodes 7d and 7c2.

### Sharing of Data Related to Transferred Electric Power

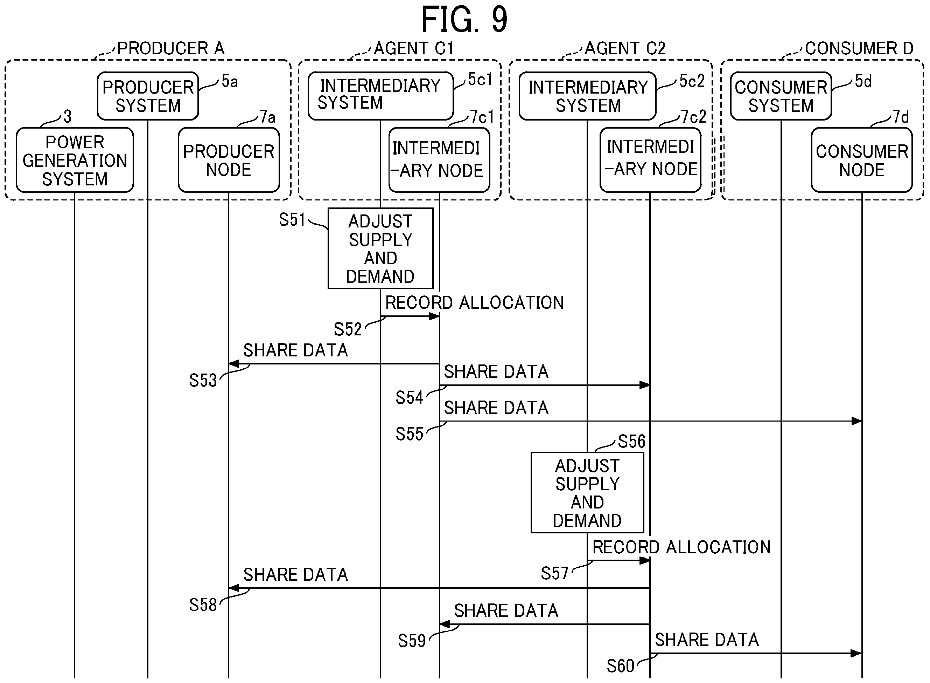

Referring now to FIG. 9, processing to share data related to electric power that the intermediary agent C1 or C2 intermediates transfer in the blockchain network is described according to the embodiment. FIG. 9 is a sequence diagram illustrating processing of sharing data related to electric power transferred in the blockchain network, according to the embodiment.

S51: In the intermediary system 5c1, the adjustment unit 55c1 performs supply-demand balance control to allocate, to the consumer D, electric power having a specific type of production method (production method indicating solar light, wind power, etc.) in a specific amount, in accordance with details of the contract with the consumer D, of the total amount of current electric power owned by the intermediary agent C1.

S52: In the intermediary system 5c1, the transmission and reception unit 51c1 transmits, to the intermediary node 7c1, data related to electric power having been allocated, as a result of the supply-demand balance control by the adjustment unit 55c1. The transmission and reception unit 71c1 of the intermediary node 7c1 receives the data related to electric power, and the storing and reading unit 78c1 stores the data related to electric power in the storage unit 79c1. In this case, the data structure illustrated in FIG. 7 indicates that the transaction status is "sell (transfer)", the current owner of the electric power is "intermediary agent C1", and the previous owner of the electric power is "producer A".

S53: The transmission and reception unit 71c1 of the intermediary node 7c1 transmits the data related to electric power to the producer node 7a. The transmission and reception unit 71a of the producer node 7a receives the data related to electric power, and the storing and reading unit 78a stores the data related to electric power in the storage unit 79a, such that data is shared between the nodes 7c1 and 7a.

S54: The transmission and reception unit 71c1 of the intermediary node 7c1 transmits the data related to electric power to the intermediary node 7c2. The transmission and reception unit 71c2 of the intermediary node 7c2 receives the data related to electric power, and the storing and reading unit 78c2 stores the data related to electric power in the storage unit 79c2, such that data is shared between the nodes 7c1 and 7c2.

S55: The transmission and reception unit 71c1 of the intermediary node 7c1 transmits the data related to electric power to the consumer node 7d. The transmission and reception unit 71d of the consumer node 7d receives the data related to electric power, and the storing and reading unit 78d stores the data related to electric power in the storage unit 79d, such that data is shared between the nodes 7c1 and 7d.

The above-described processing of S51 to S55 describes for the case when the intermediary agent C1 intermediates transfer. The processing of S56 to S60 for the case when the intermediary agent C2 intermediates transfer is performed is performed in a substantially similar manner as the processing of S51 to S55.

### Sharing of Data Related to Surplus Power

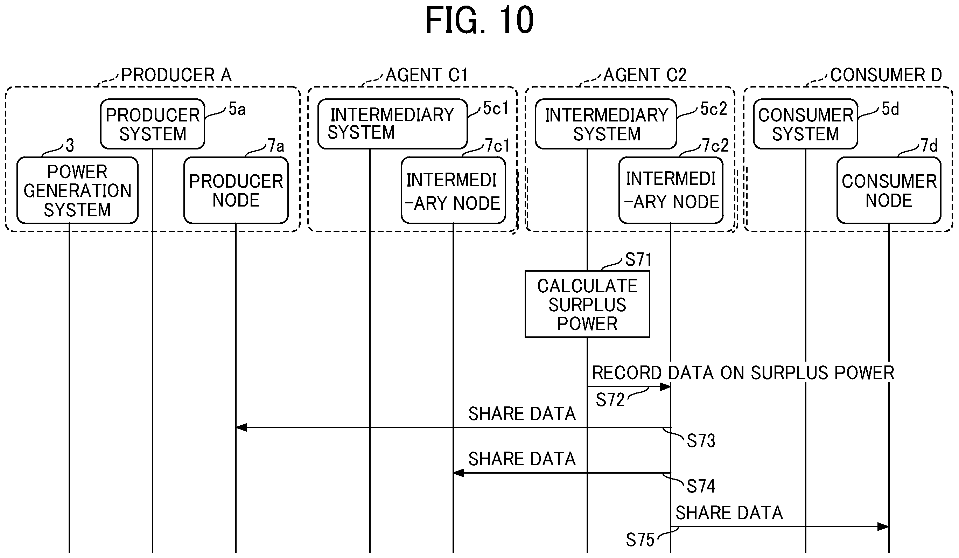

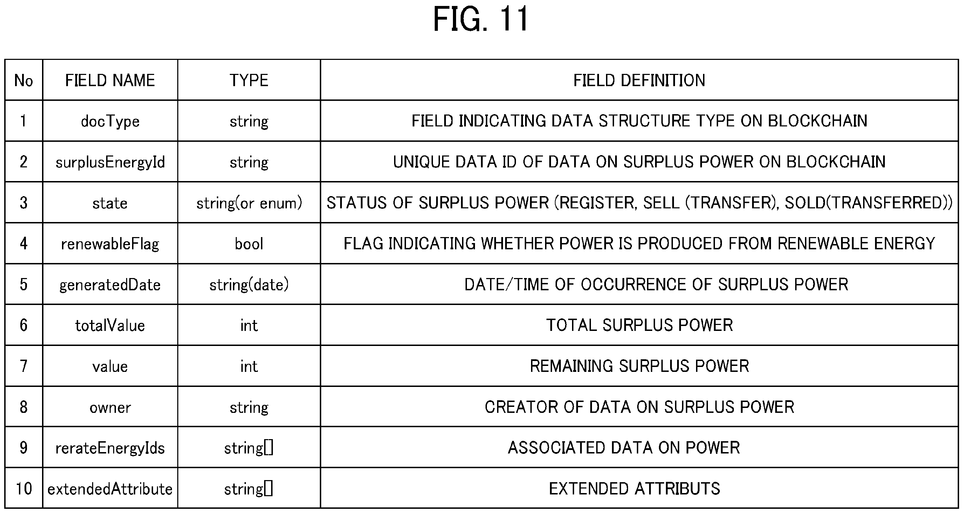

Referring now to FIG. 10 and FIG. 11, processing to share data related to surplus power in the blockchain network, performed by the intermediary agent C2, is described according to the embodiment. FIG. 10 is a sequence diagram illustrating processing of sharing data related to surplus power in the blockchain network, according to the embodiment.

The following describes an example case in which electric power owned by the intermediary agent C2 (electric power produced from renewable energy) is excessive.

S71: In the intermediary system 5c2, the calculation unit 57c2 calculates the amount of power that will remain even if the power is provided to the consumer D according to the contract, out of the total amount of power currently owned by the intermediary agent C2.

S72: In the intermediary system 5c2, the transmission and reception unit 51c2 transmits the data related to surplus power calculated by the calculation unit 57c2 to the intermediary node 7c2. The transmission and reception unit 71c2 of the intermediary node 7c2 receives the data related to surplus power, and the storing and reading unit 78c2 stores the data related to surplus power in the storage unit 79c2 to share data.

FIG. 11 is a table illustrating a data structure of data related to surplus power ("surplus power related data"). As illustrated in FIG. 11, the surplus power related data includes a field indicating a data structure type in the blockchain, a unique data ID of the surplus power related data in the blockchain, a transaction status (generate, sell (transfer), sold (transferred), etc.) of surplus power, a flag indicating whether or not surplus power is produced from renewable energy, a date and time of occurrence of surplus power, a total amount of surplus power, remaining surplus power, a creator of surplus power related data, power related data (associated with the record of FIG. 7), and an extended attribute.

The "date and time of occurrence of surplus power" indicates a date and time when surplus power occurs at the intermediary agent C2. The "total amount of surplus power" indicates, of the total amount of electric power currently owned by the intermediary agent C2, an amount of electric power that remains even after the electric power is supplied to the consumer D according to the contract. The "remaining surplus power" indicates an amount of surplus power currently remained in the total amount of surplus power. When the surplus power related data is also shared with the intermediary agent C1, the intermediary agent C1 refers to the "flag indicating whether or not the power is produced from renewable energy" and the "remaining surplus power", to have information on electric power (power produced from renewable energy) that can be transferred from the intermediary agent C2.

S73: The transmission and reception unit 71c2 of the intermediary node 7c2 transmits the data related to surplus power to the producer node 7a. The transmission and reception unit 71a of the producer node 7a receives the data related to surplus power, and the storing and reading unit 78a stores the data related to surplus power in the storage unit 79a, such that data is shared between the nodes 7c2 and 7a.

S74: The transmission and reception unit 71c2 of the intermediary node 7c2 transmits the data related to surplus power to the intermediary node 7c1. The transmission and reception unit 71c1 of the intermediary node 7c1 receives the data related to surplus power, and the storing and reading unit 78c1 stores the data related to surplus power in the storage unit 79c1, such that data is shared between the nodes 7c2 and 7c1.

S75: The transmission and reception unit 71c2 of the intermediary node 7c2 transmits the data related to surplus power to the consumer node 7d. The transmission and reception unit 71d of the consumer node 7d receives the data related to surplus power, and the storing and reading unit 78d stores the data related to surplus power in the storage unit 79d, such that data is shared between the nodes 7c2 and 7d.

### Sharing of Data Related to Power Shortage and Sharing of Data Related to Transfer of Surplus Power

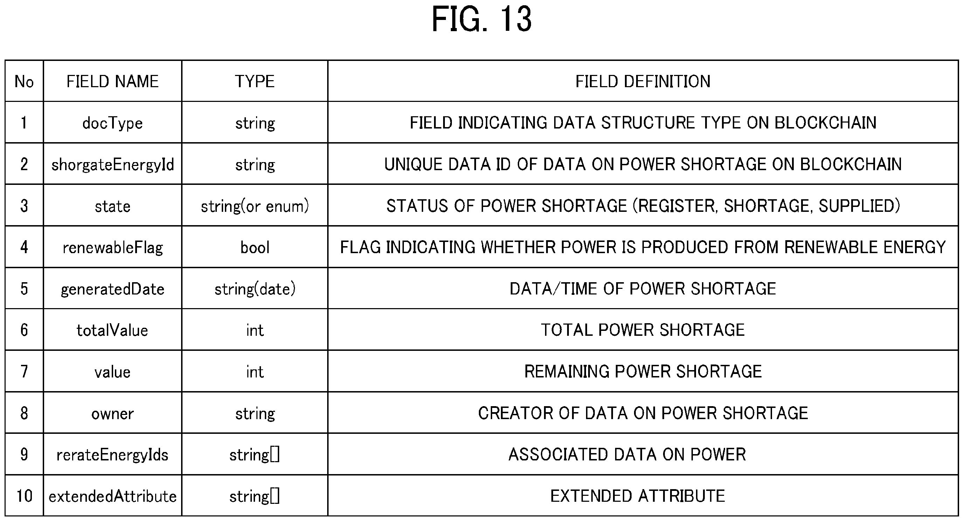

Referring now to FIGs. 12 and FIG. 13, processing to share data related to power shortage in the blockchain network performed by the intermediary agent C1, and processing to share data related to transfer of surplus power performed by the intermediary agent C2, are descried according to the embodiment. FIG. 12 is a sequence diagram illustrating processing of sharing data related to power shortage, and processing of sharing data related to transfer of surplus power, in the blockchain network, according to the embodiment. The following describes an example case in which electric power owned by the intermediary agent C1 (electric power produced from renewable energy) is insufficient.

S91: In the intermediary system 5c1, the calculation unit 57c1 calculates an amount of electric power shortage, to satisfy an amount of electric power to be provided to the consumer D by the intermediary agent C1 according to the contract.

S92: In the intermediary system 5c1, the transmission and reception unit 51c1 transmits data related to power shortage calculated by the calculation unit 57c1 to the intermediary node 7c1. The transmission and reception unit 71c1 of the intermediary node 7c1 receives the data related to power shortage, and the storing and reading unit 78c1 stores the data related to power shortage in the storage unit 79c1.

FIG. 13 is a diagram illustrating a data structure of data related to power shortage ("power shortage related data"). As illustrated in FIG. 13, the power shortage related data includes a field indicating a data structure type in the blockchain, a unique data ID of the power shortage related data in the blockchain, a transaction status (register, short, supplied, etc.) of power shortage, a flag indicating whether or not electric power is produced from renewable energy, a date and time of occurrence of power shortage, a total amount of power shortage, remaining power shortage, a creator of power shortage related data, power related data (associated with the record of FIG. 7), and an extended attribute.

The "date and time of occurrence of power shortage" indicates a date and time when power shortage occurs at the intermediary agent C1. The "total amount of power shortage " indicates the total amount of power that cannot be provided due to a shortage, of the total amount of power that the intermediary agent C1 plans to provide to the consumer D according to the contract. The "remaining power shortage" indicates an amount of power shortage currently remained in the total amount of power shortage, as a result of interchange of power, for example, from another intermediary agent C2.

S93: The transmission and reception unit 71c1 of the intermediary node 7c1 transmits the data related to power shortage to the producer node 7a. The transmission and reception unit 71a of the producer node 7a receives the data related to power shortage, and the storing and reading unit 78a stores the data related to power shortage in the storage unit 79a to share data.

S94: The transmission and reception unit 71c1 of the intermediary node 7c1 transmits the data related to power shortage to the intermediary node 7c2. The transmission and reception unit 71c2 of the intermediary node 7c2 receives the data related to power shortage, and the storing and reading unit 78c2 stores the data related to power shortage in the storage unit 79c2, such that data is shared between the nodes 7c1 and 7c2.

S95: The transmission and reception unit 71c1 of the intermediary node 7c1 transmits the data related to power shortage to the consumer node 7d. The transmission and reception unit 71d of the consumer node 7d receives the data related to power shortage, and the storing and reading unit 78d stores the data related to power shortage in the storage unit 79d, such that data is shared between the nodes 7c1 and 7d.

S96: In the intermediary system 5c1, the adjustment unit 55c1 determines an amount of power transferable within an amount of surplus power based on the surplus power related data, shared at the processing of S74. The transmission and reception unit 51c1 of the intermediary system 5c1 transmits to the intermediary system 5c2 a transfer request for transferring surplus power currently owned by the intermediary agent C2. The transfer request includes information on a name of a requester of the transfer request, and an amount of power for which the transfer is requested. As a result, the transmission and reception unit 51c2 of the intermediary system 5c2 receives the transfer request for transferring surplus power.

S97: In the intermediary system 5c2, the calculation unit 57c2 determines whether electric power can be transferred in an amount requested by the intermediary system 5c1. In other words, the intermediary system 5c2 determines whether there is surplus power related data having a total surplus power equal to or greater than an amount requested by the intermediary system 5c1. In a case where electric power is transferrable in the requested amount, the transmission and reception unit 51c2 transmits to the intermediary node 7c2 data related to surplus power, which has a total surplus power satisfying an amount of electric power requested by the intermediary system 5c1. The transmission and reception unit 71c2 of the intermediary node 7c2 receives the data related to surplus power, and the storing and reading unit 78c2 stores the data related to surplus power in the storage unit 79c2. In this case, the data structure illustrated in FIG. 11 indicates that the transaction status is "sell (transfer)", the current owner of the electric power is "intermediary agent C1", and the previous owner of the electric power is "intermediary agent C2". Further, an amount of "remaining surplus power" is also updated, to reflect electric power being transferred.

S98: The transmission and reception unit 71c2 of the intermediary node 7c2 transmits the data related to surplus power, which is updated, to the producer node 7a. The transmission and reception unit 71a of the producer node 7a receives the data related to surplus power, and the storing and reading unit 78a stores the data related to surplus power in the storage unit 79a, such that data is shared between the nodes 7c2 and 7a.

S99: The transmission and reception unit 71c2 of the intermediary node 7c2 transmits the data related to surplus power, which is updated, to the intermediary node 7c1. The transmission and reception unit 71c1 of the intermediary node 7c1 receives the data related to surplus power, and the storing and reading unit 78c 1 stores the data related to surplus power in the storage unit 79c1, such that data is shared between the nodes 7c2 and 7c1.

S100: The transmission and reception unit 71c2 of the intermediary node 7c2 transmits the data related to electric power, which is updated, to the consumer node 7d. The transmission and reception unit 71d of the consumer node 7d receives the data related to surplus power, and the storing and reading unit 78d stores the data related to surplus power in the storage unit 79d, such that data is shared between the nodes 7c2 and 7d.

As described above, according to the present embodiment, asset, such as renewable energy, can be interchanged between one intermediary agent and another intermediary agent in a timely manner.

The electric power produced from renewable energy is interchanged between a plurality of intermediary agents C, without separating the value for using renewable energy and the electric power produced from renewable energy. Accordingly, the intermediary agent C is able to intermediate transfer of asset produced by a specific production method (electric power produced from renewable energy) to a user such as a consumer according to the contract. Specifically, the intermediary agent intermediates transfer of an asset produced by a specific type for a user based on contract, without separating the value of being produced by a specific type of production method (such as the value of using renewable energy), from a specific asset produced by the specific type of production method (such as electric power produced from renewable energy).

Further, through the processing of S72 to S75, data related to surplus power owned by the intermediary agent C2 is shared with such as the intermediary agent C1. The intermediary agent C1 does not have to ask another intermediary agent C2 whether or not the intermediary agent C2 owns surplus power. As a result, the intermediary agent C1 can quickly receive the surplus power from the intermediary agent C2, such that supply-demand balance can be maintained for electric power produced from renewable energy.

Furthermore, as illustrated in FIG. 1, each system (producer system 5a, transaction market system 5b, intermediary systems 5c1 and 5c2, consumer system 5d, and storage battery systems 5f1 to 5f3) does not have to newly develop an interface other than the interface to connect to its own node (producer node 7a, transaction market node 7b, intermediary nodes 7c1 and 7c2, consumer node 7d, or storage battery nodes 7f1 to 7f2), and making it easier for the systems to operate in cooperation.

The blockchain network 100 is constructed to record data regarding interchange or transaction of renewable energy (data related to electric power, data related to surplus power, data related to power shortage, etc.) as evidence data. Therefore, it is possible to leave evidence regarding use of renewable energy. The above-described mechanism for tracking electricity using the blockchain network 100 can be a means for certifying the value of using renewable energy other than using a certificate. The above-described mechanism, especially with automation of the transaction system, can be a means for guaranteeing evidence for the value of using renewable energy at a low cost, compared with a cost required for issuing a certificate. Furthermore, unlike the case of issuing a certificate, actual use of renewable energy is facilitated as actual electric power is managed with a value for using renewable energy to produce such power. For example, the above-described mechanism can distinguish from a case where electric power produced from fossil fuel such as petroleum is actually consumed, but the value for using renewable energy is associated with such power consumption later. By standardizing the above-described mechanism using the blockchain network 100, a mechanism is created in which each entity (company) can easily participate in to facilitate use of renewable energy. Supply-demand balance control of renewable energy by a plurality of companies has been conceived, but has not been developed into actual business operation. By providing an API to a new stakeholder of various types of energy, realization of such operation and creation of a new business are promoted.

In alternative to the above-described method of interchanging electric power, there has been proposed a method of adjusting electric power among multiple entities (companies), which are gathered by an aggregator. It is however required for such entities (for example, electric power companies) to each have a contract with the aggregator, and this may limit the aggregator's potential in adjustment. The blockchain network 100 itself can automatically execute a contract, in addition to keeping a record for evidence, to enable flexible transactions between companies via a blockchain ledger.

Further, in any one of the above-described embodiments, electricity is used as an example of asset. Examples of asset include any other asset that physically exists (or exists in reality), and any other asset that does not physically exist (or not exit in reality). The data related to electric power is an example of data related to asset. The data related to surplus power is an example of data related to surplus asset. The data related to power shortage is an example of data related to asset shortage.

Examples of asset that physically exists (or exists in reality) include, but are not limited to, foods such as grains, vegetables, fruits, meats, marine products or processed foods. When the assets are grains, vegetables and fruits, the data related to asset includes, as a type of production method, supplementary information indicating whether or not pesticides have been used, or information indicating a producer or a place of production.

When the asset is meat, the data related to asset includes, as a type of production method, supplementary information indicating whether or not the animal is bred using a genetically modified crop, or information indicating a producer or a place of production.

When the asset is a marine product such as fish or shellfish, the data related to asset includes, as a type of production method, supplementary information indicating a natural product or aquaculture, or information indicating a producer (fisherman) or a production area (fishing area).

When the asset is a processed product, the data related to asset includes, as a type of production method, supplementary information indicating an allergen, information indicating whether or not the product has been processed using a genetically modified crop, or information indicating a location of a processor or a processing plant.

Examples of asset that physically exists (or exists in reality) include, but are not limited to, real estate such as land and buildings, and movable property such as goods or quantity of goods.

When the asset is real estate, the data related to asset indicates supplementary information such as ownership of the asset. When the asset is movable property, the data related to asset indicates supplementary information such as ownership of the asset.

On the other hand, examples of asset that does not physically exist (or not exit in reality) include, but are not limited to, tokens (virtual currency) or quantity of tokens, carbon dioxide emission credits, intellectual property rights, and contracts.

When the asset is a token, the data related to asset indicates supplementary information on such as ownership of the asset.

When the asset is a carbon dioxide emission credit, the data related to asset indicates supplementary information on such as ownership of the asset.

When the asset is a right such as an intellectual property right, the data related to asset indicates supplementary information on such as the owner of the right, the transferee of the right, and the licensee.

When the asset is a contract, the data related to asset indicates supplementary information on such as contract conditions and contract performance. In addition or in alternative to contracts, treaties, agreements, promises, and memorandums (memos) may be treated as asset.

Further, other types of asset that can be managed in a substantially similar manner as the example case of electricity, to allow postpaid processing, include gas, water, and communication. In the case of gas, water, or communication, the data related to asset indicates attribute information such as ownership of the asset.

The electricity produced from solar light is an example of an asset produced by a specific type of production method. Examples of the asset produced by the specific type of production method include an asset produced by any one of various types of production method as described above.

In this disclosure, the CPU 101 may be a single device or a plurality of devices.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA), System on Chip (SOC), and graphical processing unit (GPU), and conventional circuit components arranged to perform the recited functions.

Further, any of the above-described programs may be stored in a (non-transitory) recording medium for distribution.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

In one aspect, an intermediary system (5c2), operated by an intermediary agent (C2) who intermediates a transfer of an asset between a supplier (A) of the asset and a user (D) of the asset, is provided. The intermediary system (5c2) includes: a reception unit (51c2) configured to receive a request for transfer of a specific asset produced by a specific type of production method from another intermediary system (5c1) of another intermediary agent (C1); and a transmission unit (51c2) configured to transmit data related to the asset, to an intermediary node (7c2) of the intermediary agent (C2) on a blockchain network (100), the intermediary node (7c2) being capable of sharing data with another intermediary node (7c1) of the other intermediary agent (C1) on the blockchain network (100), the data related to the asset being for transferring ownership of the specific asset from the intermediary agent (C2) to the other intermediary agent (C1).

In another aspect, in the intermediary system (5c2), the transmission unit (5c2) is configured to transmit data related to a surplus asset owned by the intermediary agent (C1) to the intermediary node (7c2).

In another aspect, the intermediary system (5c2) further includes a calculation unit (57c2) configured to calculate an amount of the surplus asset owned by the intermediary agent (C2). The transmission unit (51c2) is configured to transmit the data relating to the surplus asset including the amount of the surplus asset to the intermediary node (7c2).

In another aspect, the asset is electricity.

In another aspect, the specific asset produced by the specific type of production method is electricity produced from renewable energy.

In another aspect, the intermediary system (5c2) is applicable to a write standard application programming interface (API), which enables the intermediary system (5c2) to record data to the intermediary node (7c2) on the blockchain network (100).

In another aspect, a transaction system (1) includes the intermediary system (5c2) and the intermediary node (7c2).

In another aspect, the transaction system (1) further includes the other intermediary system (5c1) and the other intermediary node (7c1).

In another aspect, a method of intermediating, performed by an intermediary system (5c2) of an intermediary agent who intermediates a transfer of an asset between a supplier (A) of the asset and a user (D) of the asset, is provided. The method includes: receiving a request for transfer of a specific asset produced by a specific type of production method from another intermediary system (5c1) of another intermediary agent (C1); and transmitting data related to the asset, to an intermediary node (7c2) of the intermediary agent (C2) on a blockchain network, the intermediary node (7c2) being capable of sharing data with another intermediary node (7c1) of the other intermediary agent (C1) on the blockchain network (100), the data related to the asset being for transferring ownership of the specific asset from the intermediary agent (C2) to the other intermediary agent (C1).

In another aspect, carrier means carrying computer readable code for controlling a computer system to carry out the above-described method is provided.

## Claims

1. An intermediary system (5c2) of an intermediary agent (C2) for intermediating a transfer of an asset between a supplier (A) of the asset and a user (D) of the asset, the intermediary system (5c2) comprising:
a reception unit (51c2) configured to receive a request for transfer of a specific asset produced by a specific type of production method from another intermediary system (5c1) of another intermediary agent (C1); and
a transmission unit (51c2) configured to transmit data related to the asset, to an intermediary node (7c2) of the intermediary agent (C2) on a blockchain network, the intermediary node (7c2) being capable of sharing data with another intermediary node (7c1) of the other intermediary agent (C1) on the blockchain network (100), the data related to the asset being for transferring ownership of the specific asset from the intermediary agent (C2) to the other intermediary agent (C1).

2. The intermediary system (5c2) of claim 1, wherein
the transmission unit (5c2) is further configured to transmit data related to a surplus asset owned by the intermediary agent (C1) to the intermediary node (7c2).

3. The intermediary system (5c2) of claim 2, further comprising:
a calculation unit (57c2) configured to calculate an amount of the surplus asset owned by the intermediary agent,
wherein the data relating to the surplus asset, transmitted by the transmission unit (5 1c2), includes the amount of the surplus asset that is calculated.

4. The intermediary system (5c2) of any one of claims 1 to 3, wherein the asset is electricity.

5. The intermediary system (5c2) of any one of claims 1 to 3, wherein the specific asset produced by the specific type of production method is electricity produced from renewable energy.

6. The intermediary system (5c2) of any one of claims 1 to 3, wherein
the intermediary system (5c2) is applicable to a write standard application programming interface (API), which enables the intermediary system (5c2) to record data to the intermediary node (7c2) on the blockchain network (100).

7. A transaction system (1), comprising:
the intermediary system (5c2) of any one of claims 1 to 3; and
the intermediary node (7c2).

8. The transaction system (1) of claim 7, further comprising:
the other intermediary system (5c1); and
the other intermediary node (7c1).

9. A method of intermediating a transfer of an asset between a supplier (A) of the asset and a user (D) of the asset, performed by an intermediary system (5c2) of an intermediary agent, the method comprising:
receiving (S96) a request for transfer of a specific asset produced by a specific type of production method from another intermediary system (5c1) of another intermediary agent (C1); and
transmitting (S97) data related to the asset, to an intermediary node (7c2) of the intermediary agent (C2) on a blockchain network, the intermediary node (7c2) being capable of sharing data with another intermediary node (7c 1) of the other intermediary agent (C 1) on the blockchain network (100), the data related to the asset being for transferring ownership of the specific asset from the intermediary agent (C2) to the other intermediary agent (C1).

10. Carrier means carrying computer readable code for controlling a computer system to carry out the method of claim 9.
